# EUROPEAN PATENT SPECIFICATION

(11) **EP 4 465 139 B1**
(45) Date of publication and mention of the grant of the patent: **22.07.2026**
(21) Application number: 22926441.1
(22) Date of filing: 17.02.2022
(51) Int. Cl.: G05B 19/418

(54) **EARLY ALERT METHOD AND APPARATUS, PROCESS INSTRUMENT COMPRISING EARLY ALERT APPARATUS, AND COMPUTING DEVICE**
FRÜHWARNVERFAHREN UND -VORRICHTUNG, PROZESSINSTRUMENT MIT FRÜHWARNVORRICHTUNG UND COMPUTERVORRICHTUNG
PROCÉDÉ ET APPAREIL D'ALERTE ANTICIPÉE, INSTRUMENT DE TRAITEMENT COMPRENANT UN APPAREIL D'ALERTE ANTICIPÉE, ET DISPOSITIF INFORMATIQUE

(43) Date of publication of application: 20.11.2024
(73) Proprietor: Siemens Aktiengesellschaft, 80333 München (DE)
(72) Inventor: PENG, Yanbin, Beijing 100016 (CN); WANG, Qinggang, Beijing 100102 (CN); WANG, Yan, Beijing 102208 (CN); WANG, Tongzhou, Beijing 100176 (CN); ZHANG, Meng, Beijing 100101 (CN)
(74) Representative: Isarpatent
(86) International application number: PCT/CN2022/076690
(87) International publication number: WO 2023/155107

(56) References cited:
- CN-A- 103 886 018
- CN-A- 105 718 715
- CN-A- 113 111 933
- CN-A- 113 408 591
- US-A1- 2007 215 556
- US-A1- 2018 275 199
- US-A1- 2020 342 272

## Description

### Technical field

The present disclosure relates generally to the technical field of the Internet of Things (IoT), and in particular relates to an early alert method and apparatus, a process instrument comprising the early alert apparatus, and a computing device.

### Background art

Process instruments are generally instruments used on a mass production operating line for measuring, monitoring and inspecting physical variables in an industrial process such as temperature, pressure, flow rate, liquid level and valve positioning. Examples of process instruments include temperature sensors, pressure sensors, liquid level meters and flow meters. If the value of a production physical variable measured by a process instrument exceeds a preset limit, warning and alarm signals will be sent to a management system or control system.

A typical example of a process instrument is a temperature transmitter. A temperature transmitter has a pair of warning thresholds (an upper limit and a lower limit) and a pair of alarm thresholds. If a measurement value exceeds a warning threshold but is within the alarm thresholds, a warning signal is sent to a controller; if a measurement value exceeds an alarm signal, an alarm signal is sent to the controller. That is to say, a warning signal will only be sent if a measurement value of the process instrument has already exceeded a warning threshold.

US 2020/342272 A1 discloses a method comprising: in response to receiving target data from a target sensor at a first time, determining one or more reference sensors based on location information of a neighbor sensor adjacent to the target sensor and a second time of receiving the latest data from the neighbor sensor; determining reference estimation data of the one or more reference sensors at the first time based on historical sensor data obtained from the one or more reference sensors; determining target estimation data of the target sensor at the first time based on the reference estimation data; and detecting abnormity of the target data based on the target data and the target estimation data. In this way, abnormity of the sensor data may be detected efficiently and accurately.

US 2018/275199 A1 discloses a system for fault prediction in electrical systems. It includes a network of recording nodes that transmit data to multi-channel recorder. The nodes monitor power quality based on a number of system parameters. These data are assembled into data blocks and are analyzed to determine load factors for the system over time. Data blocks are collected over 22 cycle periods and are evaluated against a derived standard deviation factor for the given system. The standard deviation is used to determine alert and alarm levels. The constant monitoring allows the system to alert workers of a potential upcoming fault in one or more system components. In this way repairs can be made before the component fails and the system experiences a fault condition.

### Summary of the invention

A brief summary of the present invention is given below, in order to provide a basic understanding of certain aspects of the present invention. It should be understood that this summary is not an exhaustive summary of the present invention. It is not intended to specify key or important parts of the present invention, nor is it intended to define the scope of the present invention. Its sole purpose is to set out certain concepts in simplified form, as a preamble to the more detailed description which follows.

In view of the above, the present invention proposes a method for predicting process variable measurement values that might occur in future, wherein predicted process variable estimation values are compared with a preset warning threshold, and an early alert may be sent to a management system or a control system in advance if an estimation value is greater than the preset warning threshold.

According to one aspect of the present invention, a computer-implemented early alert method for a process instrument is provided according to the claim 1.

Optionally, in an example of the abovementioned aspect, the estimation value computing step comprises:
computing the process variable estimation value in a weighted manner on the basis of the first estimation value and the second estimation value and respective weights thereof.

Optionally, in an example of the abovementioned aspect, the measurement value cycle is obtained by analysing received measurement values of multiple process variables to determine the periodicity of the process variables.

Optionally, in an example of the abovementioned aspect, before the overall prediction step, the method further comprises a user setting step: receiving a time period and a maximum threshold set by a user, wherein the overall prediction step further comprises estimating an accumulated value of the process variable within the time period on the basis of the first estimation value and/or the second estimation value, and issuing an early alert signal if the accumulated value is greater than the maximum threshold.

According to another aspect of the present invention, an early alert apparatus for a process instrument is provided according to the claim 5.

According to another aspect of the present invention, a process instrument is provided, comprising an early alert apparatus as described above, the early alert apparatus issuing an early alert signal if an estimation value of a process variable measured by the process instrument is greater than a preset warning threshold.

According to another aspect of the present invention, a computing device is provided, comprising: at least one processor; and a memory coupled to the at least one processor, the memory being used to store an instruction which, when executed by the at least one processor, causes the processor to execute the method as described above.

According to another aspect of the present invention, a non-transitory machine-readable storage medium is provided, storing an executable instruction which, when executed, causes the machine to execute the method as described above.

According to another aspect of the present invention, a computer program product is provided, wherein the computer program product is tangibly stored on a computer-readable medium and comprises a computer-executable instruction which, when executed, causes at least one processor to execute the method as described above.

The present invention provides an intelligent early warning mechanism preceding a standard warning/alarm mechanism, for performing linear prediction on the basis of historical data, and also adding a deviation value to a peak (trough) value on the basis of data periodicity to perform prediction, these two types of prediction being combined to determine a possible future estimation value of a process variable, giving an early warning for a process variable that might exceed a warning threshold, thus enabling earlier fault prediction and diagnosis, and avoiding greater harm during production.

### Brief description of the drawings

The above and other objectives, characteristics and advantages of the present invention will be understood more easily with reference to the following description of embodiments of the present invention in conjunction with the drawings. The components in the drawings are merely intended to show the principles of the present invention. In the drawings, identical or similar technical features or components are indicated by identical or similar reference numerals. In the drawings:
Fig. 1 is a flow chart of an exemplary process of an early alert method according to embodiments of the present invention.
Fig. 2 is a block diagram of an exemplary configuration of an early alert apparatus according to embodiments of the present invention.
Fig. 3 shows a schematic drawing of a process instrument.
Fig. 4 shows a block diagram of a computing device 400 for executing an early alert method according to embodiments of the present disclosure.

### Key to the drawings:

100: early alert method
S102, S104, S106, S108, S109, S110: steps
200: early alert apparatus
202: measurement value receiving unit
204: first estimation value determining unit
206: second estimation value determining unit
208: estimation value computing unit
210: overall prediction unit
209: user setting unit
300: process instrument
400: computing device
402: processor
404: memory

### Detailed description of embodiments

The subject matter described herein will now be discussed with reference to exemplary embodiments. It should be understood that these embodiments are discussed for the sole purpose of enabling those skilled in the art to better understand and thereby implement the subject matter described herein, without limiting the protection scope, applicability or examples expounded in the claims.

As used herein, the term "comprising" and variants thereof denote open terms, meaning "including but not limited to". The term "based on" means "at least partly based on". The terms "one embodiment" and "an embodiment" mean "at least one embodiment". The term "another embodiment" means "at least one other embodiment". The terms "first", "second", etc. may denote different or identical objects. Other definitions, explicit or implicit, may be included below. Unless clearly specified in the context, the definition of a term is the same throughout this Description.

In embodiments of the present invention, a method is proposed for predicting process variable measurement values that might occur in future, wherein predicted process variable estimation values are compared with a preset warning threshold, and an early alert may be sent to a management system or a control system in advance if an estimation value is greater than the preset warning threshold.

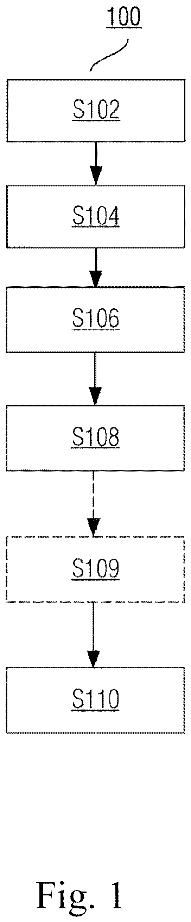

An early alert method for a process instrument according to embodiments of the present invention is described in detail below with reference to the drawings. Fig. 1 is a flow chart of an exemplary process of an early alert method 100 according to embodiments of the present invention.

Firstly, in a measurement value receiving step S102, a measurement value of a process variable measured by a process instrument is received.

Specifically, a number of measurement values of a process variable measured by a sensor of a process instrument are received from this sensor.

Next, in a first estimation value determining step S104, a linear estimation value is predicted using a linear prediction model. The linear prediction model may be generated by performing linear fitting on a predetermined number of measurement values recently measured by the process instrument. For example, linear fitting may be performed on 10 or 50 recently measured data; the specific number of measurement values may be set as needed, and there is no restriction to a specific number. A linear prediction model for measurement values of a process instrument may be obtained by linear fitting; and a process variable value that might occur in future, referred to as a linear estimation value here, may be predicted on the basis of historical measurement data using such a linear prediction model.

The predicted linear estimation value is then compared with a preset warning threshold, and if the linear estimation value is greater than the preset warning threshold, the linear estimation value is set as a first estimation value.

There will be one preset warning threshold for each different process variable, and if a linear estimation value predicted using a linear prediction model is higher than the preset warning threshold, this linear estimation value is set as a first estimation value, which will serve as one of the factors which are considered together below to determine whether to trigger a warning.

Next, in a second estimation value determining step S106: a position of a current measurement value in a measurement value cycle of the process variable is analysed, the current measurement value is compared with a value of the process variable at the same position in the previous cycle to determine a deviation value, then the deviation value is added to the previous peak value or trough value to serve as a maximum estimation value, the maximum estimation value is compared with the preset warning threshold, and if the maximum estimation value is greater than the preset warning threshold, the maximum estimation value is set as a second estimation value.

The measurement value cycle mentioned here may be obtained in advance by analysing received measurement values of multiple process variables to determine the periodicity of the process variables. Measurement value cycles may for example be different units of time such as a second, a minute, an hour, a day and a night, a day, a week, a month, a quarter, a year, etc.

In this step, the difference between values of the process variable at the same position in two consecutive cycles is taken to be a deviation value, then this deviation value is added to the previous peak value or trough value, and the next maximum value (or maximum value of absolute value) of the process variable can thus be predicted. If the maximum estimation value is greater than the preset warning threshold, this maximum estimation value is set as a second estimation value, which will serve as the other of the factors which are considered together below to determine whether to trigger a warning.

Next, in an estimation value computing step S108, a process variable estimation value is computed on the basis of the first estimation value and the second estimation value.

In this step, one process variable estimation value will be computed by combining the first estimation value and the second estimation value respectively determined in the first estimation value determining step and the second estimation value determining step.

Specifically, for example, different weights may be set for the first estimation value and the second estimation value respectively, then the first estimation value and the second estimation value may be subjected to weighted averaging to compute the process variable estimation value.

Those skilled in the art may set different weights or confidences for the first estimation value and the second estimation value according to characteristics of different process variables, or may use other algorithms to compute the process variable estimation value; the present invention does not define the specific algorithm for the process variable estimation value.

Finally, in an overall prediction step S110: the process variable estimation value is compared with the preset warning threshold, and an early alert signal is issued if the process variable estimation value is greater than the preset warning threshold.

In this way, the present invention provides an intelligent early warning mechanism preceding a standard warning/alarm mechanism, for performing linear prediction on the basis of historical data, and also adding a deviation value to a peak (trough) value on the basis of data periodicity to perform prediction, these two types of prediction being combined to determine a possible future estimation value of a process variable, giving an early warning for a process variable that might exceed a warning threshold, thus enabling earlier fault prediction and diagnosis, and avoiding greater harm during production.

In an example, before the overall prediction step S110, the process instrument early alert method 100 further comprises a user setting step S109: receiving a time period and a maximum threshold set by a user. This step is for process variables whose values can be accumulated; for example, the user might want to know the status of flow consumption within a particular time period, so can set a maximum threshold and a time period of interest to the user, then use the method of the present invention to estimate an accumulated value of the process variable within this time period on the basis of the first estimation value and/or the second estimation value, then compare the estimated accumulated value with the maximum threshold set by the user, and if it is greater than this maximum threshold, an early alert signal may be issued.

In one particular example, the process instrument is for example a household electricity meter, and the user may set a maximum amount of electricity consumption within one month. Using the first estimation value and/or the second estimation value determined according to the method of the present invention, an estimated amount of electricity consumption of the electricity meter for this month (an accumulated value of the process variable) may be predictively computed, and if this estimated amount of electricity consumption is greater than the maximum amount of electricity consumption set by the user, an early alarm signal may be sent to the user, indicating to the user that the predicted amount of electricity consumption for this month might exceed the preset maximum amount of electricity consumption.

Those skilled in the art may choose a suitable method according to characteristics of a process variable, for computing an accumulated value of the process variable within a particular time period on the basis of both the first estimation value and the second estimation value, or one of these; this is not detailed further here.

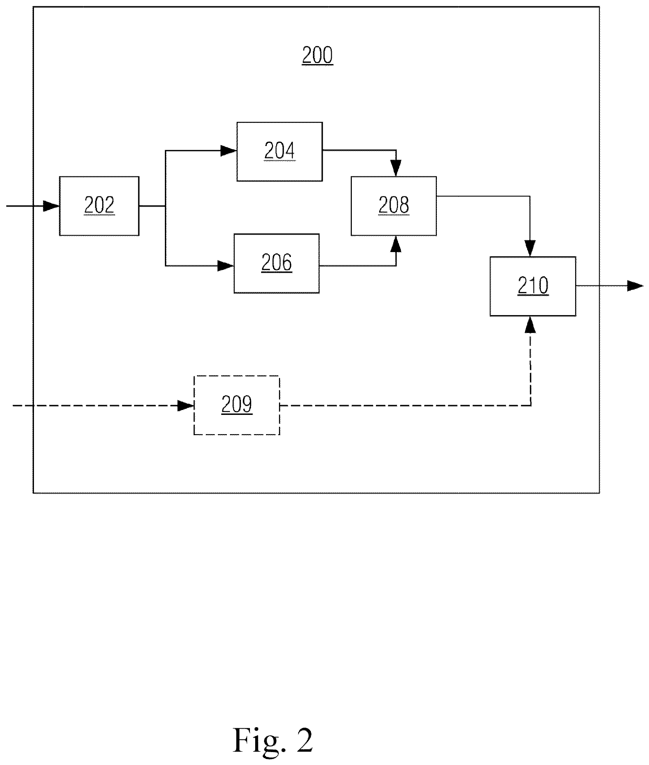

Embodiments of the present invention further provide an early alert apparatus for a process instrument; Fig. 2 is a block diagram of an exemplary configuration of an early alert apparatus 200 according to embodiments of the present invention.

As shown in Fig. 2, the early alert apparatus 200 for a process instrument comprises: a measurement value receiving unit 202, a first estimation value determining unit 204, a second estimation value determining unit 206, an estimation value computing unit 208 and an overall prediction unit 210.

The measurement value receiving unit 202 is configured to receive a measurement value of a process variable measured by a process instrument.

The first estimation value determining unit 204 is configured to predict a linear estimation value using a linear prediction model, which is generated by performing linear fitting on a predetermined number of measurement values recently measured by the process instrument, compare the linear estimation value with a preset warning threshold, and if the linear estimation value is greater than the preset warning threshold, set the linear estimation value as a first estimation value.

The second estimation value determining unit 206 is configured to analyse a position of a current measurement value in a measurement value cycle of the process variable, compare the current measurement value with a value of the process variable at the same position in the previous cycle to determine a deviation value, then add the deviation value to the previous peak value or trough value to serve as a maximum estimation value, compare the maximum estimation value with the preset warning threshold, and if the maximum estimation value is greater than the preset warning threshold, set the maximum estimation value as a second estimation value.

The estimation value computing unit 208 is configured to compute a process variable estimation value on the basis of the first estimation value and the second estimation value.

The overall prediction unit 210 is configured to compare the process variable estimation value with the preset warning threshold, and issue an early alert signal if the process variable estimation value is greater than the preset warning threshold.

The estimation value computing unit 208 is further configured to: compute the process variable estimation value in a weighted manner on the basis of the first estimation value and the second estimation value and respective weights thereof.

The measurement value cycle is obtained by analysing received measurement values of multiple process variables to determine the periodicity of the process variables.

Preferably, the early alert apparatus 200 for a process instrument may further comprise a user setting unit 209, configured to receive a time period and a maximum threshold set by a user, wherein the overall prediction unit is further configured to estimate an accumulated value of the process variable within the time period on the basis of the first estimation value and/or the second estimation value, and issue an early alert signal if the accumulated value is greater than the maximum threshold.

In embodiments of the present invention, the early alert apparatus 200 is used to perform corresponding steps of the early alert method described above with reference to Fig. 1; details of the operations and functions of the various parts of the early alert apparatus 200 may be identical or similar to the relevant parts of embodiments of the early alert method 100 of the present invention described with reference to Fig. 1, so are not described in detail again here.

It should be explained that the structure of the early alert apparatus 200 shown in Fig. 2 and its component units are merely exemplary, and those skilled in the art may modify the structural block diagram shown in Fig. 2 as needed.

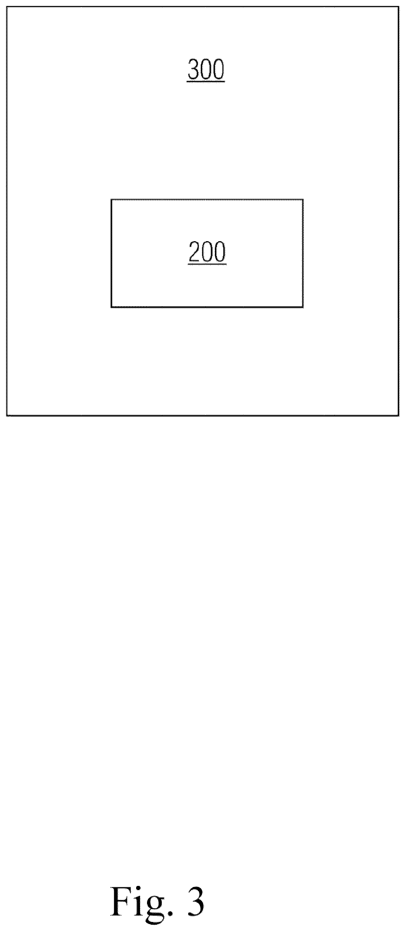

Fig. 3 shows a schematic drawing of a process instrument 300. The process instrument 300 comprises an early alert apparatus 200 according to embodiments of the present invention shown in Fig. 2, which can perform corresponding steps of the early alert method described above with reference to Fig. 1. The process instrument 300 shown in Fig. 3 can issue an early warning for a process variable that might exceed a warning threshold, thus enabling earlier fault prediction and diagnosis, and avoiding greater damage during production.

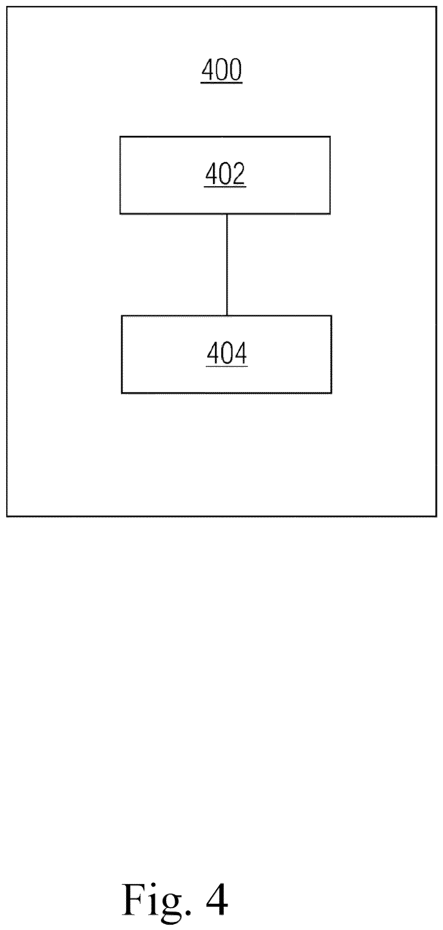

Fig. 4 shows a block diagram of a computing device 400 for executing an early alert method according to embodiments of the present disclosure. According to one embodiment, the computing device 400 may comprise at least one processor 402, the processor 402 executing at least one computer-readable instruction (i.e. the abovementioned element realized in the form of software) stored or encoded in a computer-readable storage medium (i.e. a memory 404).

It should be understood that the computer-executable instruction stored in the memory 404, when executed, causes the at least one processor 402 to perform the various operations and functions described above with reference to Figs. 1 - 3 in embodiments of the present disclosure.

According to one embodiment, a non-transitory machine-readable medium is provided. The non-transitory machine-readable medium may have a machine-executable instruction (i.e. the abovementioned element realized in the form of software) which, when executed by a machine, causes the machine to execute the various operations and functions described above with reference to Figs. 1 - 3 in embodiments of the present disclosure.

According to one embodiment, a computer program is provided, comprising a computer-executable instruction which, when executed, causes at least one processor to execute the various operations and functions described above with reference to Figs. 1 -3 in embodiments of the present disclosure.

According to one embodiment, a computer program product is provided, comprising a computer-executable instruction which, when executed, causes at least one processor to execute the various operations and functions described above with reference to Figs. 1 - 3 in embodiments of the present disclosure.

It should be understood that all of the embodiments herein are described progressively; for parts which are identical or similar in different embodiments, the corresponding embodiment may be referred to; and each embodiment focuses on describing differences from other embodiments.

Specific embodiments of this Description have been described above. Other embodiments are within the scope of the attached claims. In some situations, actions or steps recorded in the claims may be executed in a different order from that in the embodiments and still achieve the desired result. Furthermore, the processes depicted in the drawings do not necessarily require the displayed specific order or consecutive order in order to achieve the desired result. In some embodiments, multi-task processing and parallel processing are also possible or possibly advantageous.

Not all of the steps and units in the structural drawings of the processes and systems above are necessary; some steps or units may be omitted according to actual needs. The apparatus structures described in the embodiments above may be physical structures or logic structures, i.e. some units might be realized by the same physical entity, or some units might be realized by multiple physical entities separately, or may be realized jointly by certain components in multiple independent devices.

The specific implementations expounded above with reference to the drawings describe exemplary embodiments, but do not represent all embodiments that can be realized or that fall within the scope of protection of the claims. The term "exemplary" used throughout this Description means "serving as an example, instance or illustration", and does not mean "preferred" or "advantageous" compared to other embodiments. In order to provide an understanding of the technologies described, specific embodiments include specific details. However, these technologies may be implemented in the absence of these specific details. In some instances, to avoid making the concepts of the described embodiments difficult to understand, well known structures and apparatuses are shown in the form of block diagrams.

The above description of the content of the present disclosure is provided to enable any person skilled in the art to realize or use the content of the present disclosure.

The above are merely preferred embodiments of the present invention, which are not intended to limit it.

## Claims

1. A computer-implemented early alert method for a process instrument, the method comprising:
a measurement value receiving step (S102):
step receiving a number of measurement values of a process variable measured by a process instrument;
a first estimation value determining step (S104):
predicting a linear estimation value using a linear prediction model, which is generated by performing linear fitting on a predetermined number of measurement values recently measured by the process instrument, comparing the linear estimation value with a preset warning threshold, and if the linear estimation value is greater than the preset warning threshold, setting the linear estimation value as a first estimation value;
a second estimation value determining step (S106):
analysing a position of a current measurement value in a measurement value cycle of the process variable, comparing the current measurement value with a value of the process variable at the same position in the previous cycle to determine a deviation value, then adding the deviation value to a previous peak value or trough value on the basis of data periodicity to serve as a maximum estimation value,
comparing the maximum estimation value with the preset warning threshold, and if the maximum estimation value is greater than the preset warning threshold, setting the maximum estimation value as a second estimation value;
an estimation value computing step (S108):
computing a process variable estimation value on the basis of the first estimation value and the second estimation value; and
an overall prediction step (S110):
comparing the process variable estimation value with the preset warning threshold, and issuing an early alert signal if the process variable estimation value is greater than the preset warning threshold.

2. The method as claimed in claim 1, wherein the estimation value computing step comprises:
computing the process variable estimation value in a weighted manner on the basis of the first estimation value and the second estimation value and respective weights thereof.

3. The method as claimed in claim 1, wherein the measurement value cycle is obtained by analysing received measurement values of multiple process variables to determine the periodicity of the process variables.

4. The method as claimed in claim 1, wherein before the overall prediction step, the method further comprises a user setting step: receiving a time period and a maximum threshold set by a user, wherein the overall prediction step further comprises estimating an accumulated value of the process variable within the time period on the basis of the first estimation value and/or the second estimation value, and issuing an early alert signal if the accumulated value is greater than the maximum threshold.

5. An early alert apparatus (200) for a process instrument, the apparatus comprising:
a measurement value receiving unit (202), configured to receive a number of measurement values of a process variable measured by a process instrument;
a first estimation value determining unit (204), configured to predict a linear estimation value using a linear prediction model, which is generated by performing linear fitting on a predetermined number of measurement values recently measured by the process instrument, compare the linear estimation value with a preset warning threshold, and if the linear estimation value is greater than the preset warning threshold, set the linear estimation value as a first estimation value;
a second estimation value determining unit (206), configured to analyse a position of a current measurement value in a measurement value cycle of the process variable, compare the current measurement value with a value of the process variable at the same position in the previous cycle to determine a deviation value, then add the deviation value to a previous peak value or trough value on the basis of data periodicity to serve as a maximum estimation value, compare the maximum estimation value with the preset warning threshold, and if the maximum estimation value is greater than the preset warning threshold, set the maximum estimation value as a second estimation value;
an estimation value computing unit (208), configured to compute a process variable estimation value on the basis of the first estimation value and the second estimation value; and
an overall prediction unit (210), configured to compare the process variable estimation value with the preset warning threshold, and issue an early alert signal if the process variable estimation value is greater than the preset warning threshold.

6. The apparatus as claimed in claim 5, the estimation value computing unit (208) being further configured to:
compute the process variable estimation value in a weighted manner on the basis of the first estimation value and the second estimation value and respective weights thereof.

7. The apparatus as claimed in claim 5, wherein the measurement value cycle is obtained by analysing received measurement values of multiple process variables to determine the periodicity of the process variables.

8. The apparatus as claimed in claim 5, further comprising a user setting unit (209), configured to receive a time period and a maximum threshold set by a user, wherein the overall prediction unit is further configured to estimate an accumulated value of the process variable within the time period on the basis of the first estimation value and/or the second estimation value, and issue an early alert signal if the accumulated value is greater than the maximum threshold.

9. A process instrument (300), comprising the early alert apparatus (200) as claimed in any one of claims 5 - 8, the early alert apparatus (200) issuing an early alert signal if an estimation value of a process variable measured by the process instrument is greater than a preset warning threshold.

10. A computing device (400), comprising:
at least one processor (402); and
a memory (404) coupled to the at least one processor (402), the memory (404) being used to store an instruction which, when executed by the at least one processor (402), causes the processor (402) to execute the method as claimed in any one of claims 1 - 4.

11. A non-transitory machine-readable storage medium, storing an executable instruction which, when executed, causes the machine to execute the method as claimed in any one of claims 1 -4.

12. A computer program product, wherein the computer program product is tangibly stored on a computer-readable medium and comprises a computer-readable instruction which, when executed, causes at least one processor to execute the method as claimed in any one of claims 1-4.

## Patentansprüche

1. Computerimplementiertes Frühwarnverfahren für ein Prozessinstrument, wobei das Verfahren umfasst:
einen Messwertempfangsschritt (S102) zum:
Empfangen einer Anzahl von Messwerten einer Prozessvariablen, die durch ein Prozessinstrument gemessen wird;
einen ersten Schätzwertermittlungsschritt (S104) zum:
Vorhersagen eines linearen Schätzwerts unter Verwendung eines linearen Vorhersagemodells, das erzeugt wird, indem eine lineare Anpassung an eine vorbestimmte Anzahl von Messwerten erzeugt wird, die kurz zuvor durch das Prozessinstrument gemessen wurden; Vergleichen des linearen Schätzwerts mit einem voreingestellten Warnschwellenwert; und wenn der lineare Schätzwert größer als der voreingestellte Warnschwellenwert ist, Einstellen des linearen Schätzwerts als einen ersten Schätzwert; einen zweiten Schätzwertermittlungsschritt (S106) zum:
Analysieren einer Position eines aktuellen Messwerts in einem Messwertzyklus der Prozessvariablen; Vergleichen des aktuellen Messwerts mit einem Wert der Prozessvariablen an der gleichen Position in dem vorherigen Zyklus, um einen Abweichungswert zu ermitteln; danach Addieren des Abweichungswerts zu einem vorherigen Spitzenwert oder Tiefstwert auf der Grundlage einer Regelmäßigkeit von Daten, um als ein maximaler Schätzwert zu dienen; Vergleichen des maximalen Schätzwerts mit dem voreingestellten Warnschwellenwert; und wenn der maximale Schätzwert größer als der voreingestellte Warnschwellenwert ist, Einstellen des maximalen Schätzwerts als einen zweiten Schätzwert;
einen Schätzwertberechnungsschritt (S108) zum:
Berechnen eines Schätzwerts einer Prozessvariablen auf der Grundlage des ersten Schätzwerts und des zweiten Schätzwerts; und
einen Gesamtvorhersageschritt (S110) zum:
Vergleichen des Schätzwerts der Prozessvariablen mit dem voreingestellten Warnschwellenwert und Ausgeben eines Frühwarnsignals, wenn der Schätzwert der Prozessvariablen größer als der voreingestellte Warnschwellenwert ist.

2. Verfahren nach Anspruch 1, wobei der Schätzwertberechnungsschritt umfasst:
Berechnen des Schätzwerts der Prozessvariablen in einer gewichteten Weise auf der Grundlage des ersten Schätzwerts und des zweiten Schätzwerts und entsprechenden Gewichtungen derselben.

3. Verfahren nach Anspruch 1, wobei der Messwertzyklus erhalten wird, indem empfangene Messwerte von mehreren Prozessvariablen analysiert werden, um die Regelmäßigkeit der Prozessvariablen zu ermitteln.

4. Verfahren nach Anspruch 1, wobei das Verfahren vor dem Gesamtvorhersageschritt ferner einen Benutzereinstellungsschritt umfasst zum: Empfangen eines Zeitraums und eines maximalen Schwellenwerts, die durch einen Benutzer eingestellt werden, wobei der Gesamtvorhersageschritt ferner ein Schätzen eines akkumulierten Werts der Prozessvariablen innerhalb des Zeitraums auf der Grundlage des ersten Schätzwerts und/oder des zweiten Schätzwerts und ein Ausgeben eines Frühwarnsignals umfasst, wenn der akkumulierte Wert größer als der maximale Schwellenwert ist.

5. Frühwarneinrichtung (200) für ein Prozessinstrument, wobei die Einrichtung umfasst:
eine Messwertempfangseinheit (202), die konfiguriert ist zum Empfangen einer Anzahl von Messwerten einer Prozessvariablen, die durch ein Prozessinstrument gemessen wird;
eine erste Schätzwertermittlungseinheit (204), die konfiguriert ist zum Vorhersagen eines linearen Schätzwerts unter Verwendung eines linearen Vorhersagemodells, das erzeugt wird, indem eine lineare Anpassung an eine vorbestimmte Anzahl von Messwerten erzeugt wird, die kurz zuvor durch das Prozessinstrument gemessen wurden; zum Vergleichen des linearen Schätzwerts mit einem voreingestellten Warnschwellenwert; und wenn der lineare Schätzwert größer als der voreingestellte Warnschwellenwert ist, zum Einstellen des linearen Schätzwerts als einen ersten Schätzwert;
eine zweite Schätzwertermittlungseinheit (206), die konfiguriert ist zum Analysieren einer Position eines aktuellen Messwerts in einem Messwertzyklus der Prozessvariablen; zum Vergleichen des aktuellen Messwerts mit einem Wert der Prozessvariablen an der gleichen Position in dem vorherigen Zyklus, um einen Abweichungswert zu ermitteln; danach zum Addieren des Abweichungswerts zu einem vorherigen Spitzenwert oder Tiefstwert auf der Grundlage einer Regelmäßigkeit von Daten, um als ein maximaler Schätzwert zu dienen; zum Vergleichen des maximalen Schätzwerts mit dem voreingestellten Warnschwellenwert; und wenn der maximale Schätzwert größer als der voreingestellte Warnschwellenwert ist, zum Einstellen des maximalen Schätzwerts als einen zweiten Schätzwert;
eine Schätzwertberechnungseinheit (208), die konfiguriert ist zum Berechnen eines Schätzwerts einer Prozessvariablen auf der Grundlage des ersten Schätzwerts und des zweiten Schätzwerts; und
eine Gesamtvorhersageeinheit (210), die konfiguriert ist zum Vergleichen des Schätzwerts der Prozessvariablen mit dem voreingestellten Warnschwellenwert und zum Ausgeben eines Frühwarnsignals, wenn der Schätzwert der Prozessvariablen größer als der voreingestellte Warnschwellenwert ist.

6. Einrichtung nach Anspruch 5, wobei die Schätzwertberechnungseinheit (208) ferner konfiguriert ist zum: Berechnen des Schätzwerts der Prozessvariablen in einer gewichteten Weise auf der Grundlage des ersten Schätzwerts und des zweiten Schätzwerts und entsprechenden Gewichtungen derselben.

7. Einrichtung nach Anspruch 5, wobei der Messwertzyklus erhalten wird, indem empfangene Messwerte von mehreren Prozessvariablen analysiert werden, um die Regelmäßigkeit der Prozessvariablen zu ermitteln.

8. Einrichtung nach Anspruch 5, die ferner eine Benutzereinstellungseinheit (209) umfasst, die konfiguriert ist zum Empfangen eines Zeitraums und eines maximalen Schwellenwerts, die durch einen Benutzer eingestellt werden, wobei die Gesamtvorhersageeinheit ferner konfiguriert ist zum Schätzen eines akkumulierten Werts der Prozessvariablen innerhalb des Zeitraums auf der Grundlage des ersten Schätzwerts und/oder des zweiten Schätzwerts und zum Ausgeben eines Frühwarnsignals, wenn der akkumulierte Wert größer als der maximale Schwellenwert ist.

9. Prozessinstrument (300), das die Frühwarneinrichtung (200) nach einem der Ansprüche 5 bis 8 umfasst, wobei die Frühwarneinrichtung (200) ein Frühwarnsignal ausgibt, wenn ein Schätzwert einer Prozessvariablen, die durch das Prozessinstrument gemessen wird, größer als ein voreingestellter Warnschwellenwert ist.

10. Computervorrichtung (400), umfassend:
mindestens einen Prozessor (402) und
einen Speicher (404), der mit dem mindestens einen Prozessor (402) gekoppelt ist, wobei der Speicher (404) verwendet wird zum Speichern eines Befehlssatzes, der, wenn er von dem mindestens einen Prozessor (402) ausgeführt wird, den Prozessor (402) veranlasst, das Verfahren nach einem der Ansprüche 1 bis 4 auszuführen.

11. Nicht-flüchtiges maschinenlesbares Speichermedium, in dem ein ausführbarer Befehlssatz gespeichert ist, der, wenn er ausgeführt wird, die Maschine veranlasst, das Verfahren nach einem der Ansprüche 1 bis 4 auszuführen.

12. Computerprogrammprodukt, wobei das Computerprogrammprodukt konkret in einem computerlesbaren Speichermedium gespeichert ist und einen computerausführbaren Befehlssatz umfasst, der, wenn er ausgeführt wird, mindestens einen Prozessor veranlasst, das Verfahren nach einem der Ansprüche 1 bis 4 auszuführen.

## Revendications

1. Procédé d'alerte précoce mis en œuvre par ordinateur pour un instrument de processus, le procédé comprenant :
une étape (S102) de réception de valeur de mesure :
réception d'un nombre de valeurs de mesure d'une variable de processus mesurées par un instrument de processus ;
une étape (S104) de détermination de première valeur d'estimation :
prédiction d'une valeur d'estimation linéaire en utilisant un modèle de prédiction linéaire généré en effectuant un ajustement linéaire sur un nombre prédéterminé de valeurs de mesure récemment mesurées par l'instrument de processus, comparaison de la valeur d'estimation linéaire avec un seuil d'avertissement prédéterminé, et si la valeur d'estimation linéaire est supérieure au seuil d'avertissement prédéterminé, définition de la valeur d'estimation linéaire comme première valeur d'estimation ;
une étape (S106) de détermination de deuxième valeur d'estimation :
analyse d'une position d'une valeur de mesure actuelle dans un cycle de valeurs de mesure de la variable de processus, comparaison de la valeur de mesure actuelle avec une valeur de la variable de processus à la même position dans le cycle précédent pour déterminer une valeur de déviation, puis ajout de la valeur de déviation à une valeur de crête ou une valeur de creux précédente sur la base d'une périodicité de données pour servir de valeur d'estimation maximale, comparaison de la valeur d'estimation maximale avec le seuil d'avertissement prédéfini, et si la valeur d'estimation maximale est supérieure au seuil d'avertissement prédéfini, définition de la valeur d'estimation maximale comme deuxième valeur d'estimation ;
une étape (S108) de calcul de valeur d'estimation :
calcul d'une valeur d'estimation de variable de processus sur la base de la première valeur d'estimation et de la deuxième valeur d'estimation ; et
une étape (S110) de prédiction globale :
comparaison de la valeur d'estimation de variable de processus avec le seuil d'avertissement prédéfini, et émission d'un signal d'alerte précoce si la valeur d'estimation de variable de processus est supérieure au seuil d'avertissement prédéfini.

2. Procédé selon la revendication 1, l'étape de calcul de valeur d'estimation comprenant :
calcul pondéré de la valeur d'estimation de variable de processus sur la base de la première valeur d'estimation et de la deuxième valeur d'estimation et des poids respectifs de celles-ci.

3. Procédé selon la revendication 1, le cycle de valeurs de mesure étant obtenu en analysant des valeurs de mesure reçues de variables de processus multiples pour déterminer la périodicité des variables de processus.

4. Procédé selon la revendication 1, avant l'étape de prédiction globale, le procédé comprenant en outre une étape de paramétrage utilisateur : la réception d'une période de temps et d'un seuil maximal définis par un utilisateur, l'étape de prédiction globale comprenant en outre une estimation d'une valeur cumulée de la variable de processus dans la période de temps sur la base de la première valeur d'estimation et/ou de la deuxième valeur d'estimation, et l'émission d'un signal d'alerte précoce si la valeur cumulée est supérieure au seuil maximal.

5. Appareil d'alerte précoce (200) pour un instrument de processus, l'appareil comprenant :
une unité de réception de valeur de mesure (202), configurée pour recevoir un nombre de valeurs de mesure d'une variable de processus mesurées par un instrument de processus ;
une première unité de détermination de valeur d'estimation (204), configurée pour prédire une valeur d'estimation linéaire en utilisant un modèle de prédiction linéaire généré en effectuant un ajustement linéaire sur un nombre prédéterminé de valeurs de mesure récemment mesurées par l'instrument de processus, comparer la valeur d'estimation linéaire avec un seuil d'avertissement prédéterminé, et si la valeur d'estimation linéaire est supérieure au seuil d'avertissement prédéterminé, définir la valeur d'estimation linéaire comme première valeur d'estimation ;
une deuxième unité de détermination de valeur d'estimation (206), configurée pour analyser une position d'une valeur de mesure actuelle dans un cycle de valeurs de mesure de la variable de processus, comparer la valeur de mesure actuelle avec une valeur de la variable de processus à la même position dans le cycle précédent pour déterminer une valeur de déviation, puis ajouter la valeur de déviation à une valeur de crête ou une valeur de creux précédente sur la base d'une périodicité de données pour servir de valeur d'estimation maximale, comparer la valeur d'estimation maximale avec le seuil d'avertissement prédéfini, et si la valeur d'estimation maximale est supérieure au seuil d'avertissement prédéfini, définir la valeur d'estimation maximale comme deuxième valeur d'estimation ;
une unité de calcul de valeur d'estimation (208), configurée pour calculer une valeur d'estimation de variable de processus sur la base de la première valeur d'estimation et de la deuxième valeur d'estimation ; et
une unité de prédiction globale (210), configurée pour comparer la valeur d'estimation de variable de processus avec le seuil d'avertissement prédéfini, et émettre un signal d'alerte précoce si la valeur d'estimation de variable de processus est supérieure au seuil d'avertissement prédéfini.

6. Appareil selon la revendication 5, l'unité de calcul de valeur d'estimation (208) étant en outre configurée pour :
calculer de manière pondérée la valeur d'estimation de variable de processus sur la base de la première valeur d'estimation et de la deuxième valeur d'estimation et des poids respectifs de celles-ci.

7. Appareil selon la revendication 5, le cycle de valeurs de mesure étant obtenu en analysant des valeurs de mesure reçues de variables de processus multiples pour déterminer la périodicité des variables de processus.

8. Appareil selon la revendication 5, comprenant en outre une unité de paramétrage utilisateur (209), configurée pour recevoir une période de temps et un seuil maximal définis par un utilisateur, l'unité de prédiction globale étant en outre configurée pour estimer une valeur cumulée de la variable de processus dans la période de temps sur la base de la première valeur d'estimation et/ou de la deuxième valeur d'estimation, et émettre un signal d'alerte précoce si la valeur cumulée est supérieure au seuil maximal.

9. Instrument de processus (300), comprenant l'appareil d'alerte précoce (200) selon l'une quelconque des revendications 5 à 8, l'appareil d'alerte précoce (200) émettant un signal d'alerte précoce si une valeur d'estimation d'une variable de processus mesurée par l'instrument de processus est supérieure à un seuil d'avertissement prédéfini.

10. Dispositif informatique (400), comprenant :
au moins un processeur (402) ; et
une mémoire (404) couplée à l'au moins un processeur (402), la mémoire (404) étant utilisée pour stocker une instruction qui, lorsqu'elles est exécutée par l'au moins un processeur (402), amène le processeur (402) à exécuter le procédé selon l'une quelconque des revendications 1 à 4.

11. Support de stockage non transitoire lisible par machine, stockant une instruction exécutable qui, lorsqu'elles est exécutée, amène la machine à exécuter le procédé selon l'une quelconque des revendications 1 à 4.

12. Produit programme informatique, le produit programme informatique étant stocké de manière tangible sur un support lisible par ordinateur et comprenant une instruction lisible par ordinateur qui, lorsqu'elle est exécutée, amène au moins un processeur à exécuter le procédé selon l'une quelconque des revendications 1 à 4.
